(19) Europäisches Patentamt
European Patent Office
Office européen des brevets

(11) EP 3 428 875 A1

(12) EUROPEAN PATENT APPLICATION

(43) Date of publication:
16.01.2019 Bulletin 2019/03

(51) Int Cl.:
G06T 3/40 (2006.01)    G06T 7/593 (2017.01)

(21) Application number: 18177440.7

(22) Date of filing: 13.06.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 10.07.2017 GB 201711090

(71) Applicant: Nokia Technologies Oy
02610 Espoo (FI)

(72) Inventors:
• WANG, Tinghuai
  33720 Tampere (FI)
• YOU, Yu
  36220 Kangasala (FI)
• FAN, Lixin
  33720 Tampere (FI)

(74) Representative: Nokia EPO representatives
Nokia Technologies Oy
Karaportti 3
02610 Espoo (FI)

(54) **METHODS AND APPARATUSES FOR PANORAMIC IMAGE PROCESSING**

(57)    This specification describes a method comprising generating, from a plurality of first images representing a scene, at least one stereoscopic panoramic image comprising a left-eye panoramic image and a right-eye panoramic image. Depth map images are generated corresponding to each of the left and right -eye panoramic images. Each of the left and right -eye panoramic images are re-projected to obtain a plurality of second images, each associated with a respective virtual camera. Each of the left and right -eye depth map images are re-projected to generate a re-projected depth map associated with each second image. A first three-dimensional model of the scene based on the plurality of second images is determined. A second three-dimensional model of the scene based on the plurality of re-projected depth map images is determined. One or more corresponding points of the first and second three-dimensional models is or are compared to determine a scaling factor.

Fig. 6

EP 3 428 875 A1

## Description

### Technical Field

The present specification relates to methods and apparatuses for panoramic image processing.

### Background

It is known to use camera systems comprising multiple cameras for capturing panoramic images. For example, commercial multi-directional image capture apparatuses are available for capturing 360° stereoscopic content using multiple cameras distributed around a body of the system. Nokia's OZO system is one such example. Such camera systems have applications relating to video capture, sharing, three-dimensional (3D) reconstruction, virtual reality (VR) and augmented reality (AR.)

In such camera systems, camera pose registration is an important technique used to determine positions and orientations of image capture apparatuses such as cameras. The recent advent of commercial multi-directional image capture apparatuses, such as 360° camera systems, brings new challenges with regard to the performance of camera pose registration in a reliable, accurate and efficient manner.

### Summary

A first aspect of the invention provides a method comprising: (i) generating, from a plurality of first images representing a scene, at least one stereoscopic panoramic image comprising a stereo-pair of panoramic images; (ii) generating depth map images corresponding to each of the stereo-pair images; (iii) re-projecting each of the stereo pair images to obtain a plurality of second images, each associated with a respective virtual camera; (iv) re-projecting each of the stereo-pair depth map images to generate a re-projected depth map associated with each second image; (v) determining a first three-dimensional model of the scene based on the plurality of second images; (vi) determining a second three-dimensional model of the scene based on the plurality of re-projected depth map images; and (vii) comparing one or more corresponding points of the first and second three-dimensional models to determine a scaling factor.

The first images may be captured by respective cameras of a multi-directional image capture apparatus.

A plurality of sets of first images may be generated using a plurality of multi-directional image capture apparatuses, and wherein steps (i) to (vii) may be performed for each multi-directional image capture apparatus.

Step (vi) may comprise back-projecting one or more points $p$, located on a plane associated with respective virtual cameras, into three-dimensional space.

One or more points $p$ may be determined based on the first three-dimensional model.

The one or more points $p$ may be determined by projecting one or more points $P$ of the first three-dimensional model, visible to a particular virtual camera, to the plane associated with said virtual camera.

Each of the one or more points $p$ may be determined based on intrinsic and extrinsic parameters of the said virtual camera.

Each of the one or more points $p$ may be determined substantially by:

$$p = K[R \mid t]P$$

where $K$ and $[R|t]$ are the respective intrinsic and extrinsic parameters of said virtual camera.

Back-projecting the one or more points $p$ may comprise, for said virtual camera, identifying a correspondence between a point $p$ on the virtual camera plane and a point $P$ of the first three-dimensional model and determining a new point $P'$ of the second three-dimensional model based on the depth value associated with the point p on the depth map image.

The new point $P'$ may be located on a substantially straight line that passes through points $p$ and $P$.

The first images may be fisheye images.

The plurality of first images may be processed to generate the plurality of stereo-pairs of panoramic images by de-warping the first images, and stitching the de-warped images to generate the panoramic images.

The second images and the depth map images may be rectilinear images.

Step (v) may comprise processing the plurality of second images using a structure from motion algorithm.

The method may further comprise using the plurality of processed second images to generate respective positions of the virtual cameras associated with the second images.

The method may further comprise using the respective positions of the virtual cameras to generate respective positions of each multi-directional image capture apparatus.

The stereo pair images of each stereoscopic panoramic image may be offset from each other by a baseline distance.

The baseline distance may be a predetermined fixed distance.

The baseline distance may be determined by: minimising a cost function which indicates an error associated with use of each of a plurality of baseline distances; and determining that the baseline distance associated with the lowest error is to be used.

The processing of the plurality of second images to generate respective positions of the virtual cameras may comprise processing the second images using a structure from motion algorithm to generate the positions of the virtual cameras and wherein the cost function is a weighted average of: re-projection error from the structure from motion algorithm; and variance of calculated baseline distances between stereo-pairs of virtual cameras.

The method may further comprise: determining a pixel to real world distance conversion factor based on the determined positions of the virtual cameras and the baseline distance used.

The processing of the plurality of second images may generate respective orientations of the virtual cameras, and the method may further comprise: based on the generated orientations of the virtual cameras, determining an orientation of each of the plurality of multi-directional image capture apparatuses.

A second aspect of the invention provides an apparatus configured to perform a method according to any preceding definition.

A third aspect of the invention provides computer-readable instructions which, when executed by computing apparatus, cause the computing apparatus to perform a method according to any preceding definition.

A fourth aspect of the invention provides a computer-readable medium having computer-readable code stored thereon, the computer readable code, when executed by at least one processor, causes performance of: (i) generating, from a plurality of first images representing a scene, at least one stereoscopic panoramic image comprising a stereo pair of panoramic images; (ii) generating depth map images corresponding to each of the stereo pair images; (iii) re-projecting each of the stereo pair images to obtain a plurality of second images, each associated with a respective virtual camera; (iv) re-projecting each of the stereo pair depth map images to generate a re-projected depth map associated with each second image; (v) determining a first three-dimensional model of the scene based on the plurality of second images; (vi) determining a second three-dimensional model of the scene based on the plurality of re-projected depth map images; and (vii) comparing one or more corresponding points of the first and second three-dimensional models to determine a scaling factor.

A fifth aspect of the invention provides an apparatus comprising: at least one processor; and at least one memory including computer program code, which when executed by the at least one processor, causes the apparatus to: generate, from a plurality of first images representing a scene, at least one stereoscopic panoramic image comprising a stereo pair of panoramic images; generate depth map images corresponding to each of the stereo pair images; re-project each of the stereo pair images to obtain a plurality of second images, each associated with a respective virtual camera; re-project each of the stereo pair depth map images to generate a re-projected depth map associated with each second image; determine a first three-dimensional model of the scene based on the plurality of second images; determine a second three-dimensional model of the scene based on the plurality of re-projected depth map images; and compare one or more corresponding points of the first and second three-dimensional models to determine a scaling factor.

A sixth aspect of the invention provides an apparatus comprising: means for generating, from a plurality of first images representing a scene, at least one stereoscopic panoramic image comprising a stereo pair of panoramic images; means for generating depth map images corresponding to each of the stereo pair images; means for re-projecting each of the stereo pair images to obtain a plurality of second images, each associated with a respective virtual camera; means for re-projecting each of the stereo pair depth map images to generate a re-projected depth map associated with each second image; means for determining a first three-dimensional model of the scene based on the plurality of second images; means for determining a second three-dimensional model of the scene based on the plurality of re-projected depth map images; and means for comparing one or more corresponding points of the first and second three-dimensional models to determine a scaling factor.

**Brief Description of the Drawings**

For a more complete understanding of the methods, apparatuses and computer-readable instructions described herein, reference is now made to the following description taken in connection with the accompanying drawings, in which:

Figure 1 illustrates an example of multiple multi-directional image capture apparatuses in an environment;

Figures 2A and 2B illustrate examples of ways in which images captured by a multi-directional image capture apparatus are processed;

Figures 3A and 3B illustrate the determination of the position and orientation of a multi-directional image capture apparatus relative to a reference coordinate system;

Figure 4 is a flowchart illustrating examples of various operations which may be performed by an image processing apparatus based on a plurality of images captured by a plurality of multi-directional image capture apparatuses;

Figure 5 is a graphical diagram, showing part of a 3D reconstruction space for comparing camera pose estimates for a first and subsequent frame to show a difference in scale;

Figure 6 is a flowchart illustrating examples of various operations which may be performed by an image processing apparatus for determining a scaling factor, in accordance with embodiments;

Figures 7a and 7b illustrate a stereo pair of panoramic images and corresponding panoramic depth maps, respectively;

Figure 8 is a schematic diagram which is useful for understanding the creation of the depth maps;

Figure 9 illustrates a re-projection of the stereo pair of panoramic images into second images, associated with respective virtual cameras;

Figure 10 illustrates a re-projection of the panoramic depth maps, into re-projected depth maps, associated with respective second images;

Figure 11 is a flowchart illustrating examples of various operations which may be performed in creating a second 3D model, according to preferred embodiments;

Figure 12 is a flowchart illustrating examples of various operations which may be performed in creating the second 3D model, according to other preferred embodiments;

Figure 13 is a schematic diagram for illustrating graphically the Figure 11 and Figure 12 operations for one virtual camera;

Figure 14 is a schematic diagram for illustrating graphically one operation of the Figure 11 and Figure 12 operations;

Figure 15 is a schematic diagram for illustrating the Figure 11 and Figure 12 operations for multiple virtual cameras;

Figure 16 is a schematic diagram of an example configuration of an image processing apparatus configured to perform various operations including those described with reference to Figures 4, 6, 11 and 12;

Figure 17 illustrates an example of a computer-readable storage medium with computer readable instructions stored thereon.

## Detailed Description

In the description and drawings, like reference numerals may refer to like elements throughout.

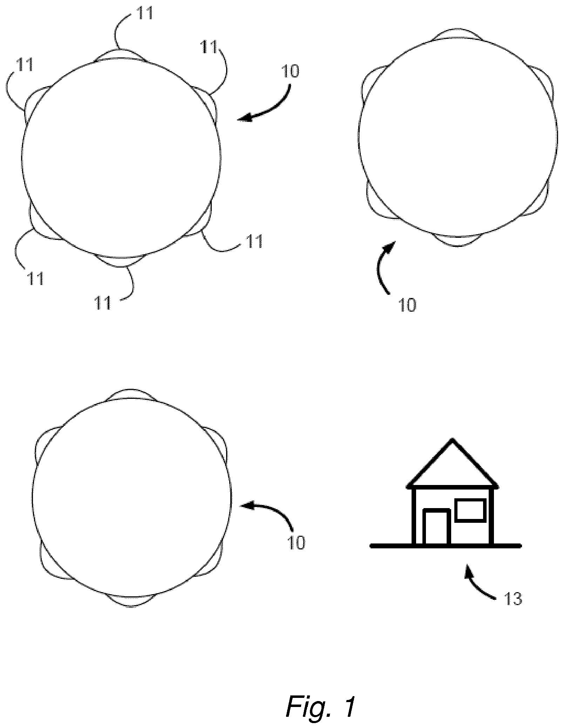

Figure 1 illustrates a plurality of multi-directional image capture apparatuses 10 located within an environment. The multi-directional image capture apparatuses 10 may, in general, be any apparatus capable of capturing images of a scene 13 from multiple different perspectives simultaneously. For example, multi-directional image capture apparatus 10 may be a 360° camera system (also known as an omnidirectional camera system or a spherical camera system). However, it will be appreciated that multi-directional image capture apparatus 10 does not necessarily have to have full angular coverage of its surroundings and may only cover a smaller field of view.

The term "image" used herein may refer generally to visual content. This may be visual content captured by, or derived from visual content captured by, multi-directional image capture apparatus 10. For example, an image may be a photograph or a single frame of a video.

As illustrated in Figure 1, each multi-directional image capture apparatus 10 may comprise a plurality of cameras 11. The term "camera" used herein may refer to a sub-part of a multi-directional image capture apparatus 10 which performs the capturing of images.

As illustrated, each of the plurality of cameras 11 of multi-directional image capture apparatus 10 may be facing a different direction to each of the other cameras 11 of the multi-directional image capture apparatus 10. As such, each camera 11 of a multi-directional image capture apparatus 10 may have a different field of view, thus allowing the multi-directional image capture apparatus 10 to capture images of a scene 13 from different perspectives simultaneously.

Similarly, as illustrated in Figure 1, each multi-directional image capture apparatus 10 may be at a different location to each of the other multi-directional image capture apparatuses 10. Thus, each of the plurality of multi-directional image capture apparatuses 10 may capture images of the environment (via their cameras 11) from different perspectives simultaneously.

In the example scenario illustrated in Figure 1, a plurality of multi-directional image capture apparatuses 10 are arranged to capture images of a particular scene 13 within the environment. In such circumstances, it may be desirable to perform camera pose registration in order to determine the position and orientation of each of the multi-directional image capture apparatuses 10. In particular, it may be desirable to determine these positions and orientations relative to a particular reference coordinate system. This allows the overall arrangement of the multi-directional image capture apparatuses 10 relative to each other to be determined, which may be useful for a number of functions. For example, such information may be used for any of the following: performing 3D reconstruction of the captured environment, performing 3D registration of the multi-directional image capture apparatuses 10 with respect to other sensors such as LiDAR (Light Detection and Ranging) or infrared (IR) depth sensors, audio positioning of audio sources, playback of object-based audio with respect to multi-directional image capture apparatus 10 location, and presenting multi-directional image capture apparatuses positions as 'hotspots' to which a viewer can switch during virtual reality (VR) viewing.

One way of determining the positions of multi-directional image capture apparatuses 10 is to use Global Positioning System (GPS) localization. However, GPS only provides position information and does not provide orientation information. In addition, position information obtained by GPS may not be very accurate and may be susceptible to changes in the quality of the satellite connection. One way of determining orientation information is to obtain the orientation information from magnetometers and accelerometers installed in the multi-directional image capture apparatuses 10. However, such instruments may be susceptible to local disturbance (e.g. magnetometers may be disturbed by a local magnetic field), so the accuracy of orientation information obtained in this way is not necessarily very high.

Another way of performing camera pose registration is to use a computer vision method. For example, position and orientation information can be obtained by performing structure from motion (SfM) analysis on images captured by a multi-directional image capture apparatus 10. Broadly speaking, SfM works by determining point correspondences between images (also known as feature matching) and calculating location and orientation based on the determined point correspondences.

However, when multi-directional image capture apparatuses 10 are used to capture a scene which lacks distinct features/textures (e.g. a corridor), determination of point correspondences between captured images may be unreliable due to the lack of distinct features/textures in the limited field of view of the images. In addition, since multi-directional image capture apparatuses 10 typically capture fish-eye images, it may not be possible to address this by capturing fish-eye images with increased field of view, as this will lead to increased distortion of the images which may negatively impact point correspondence determination.

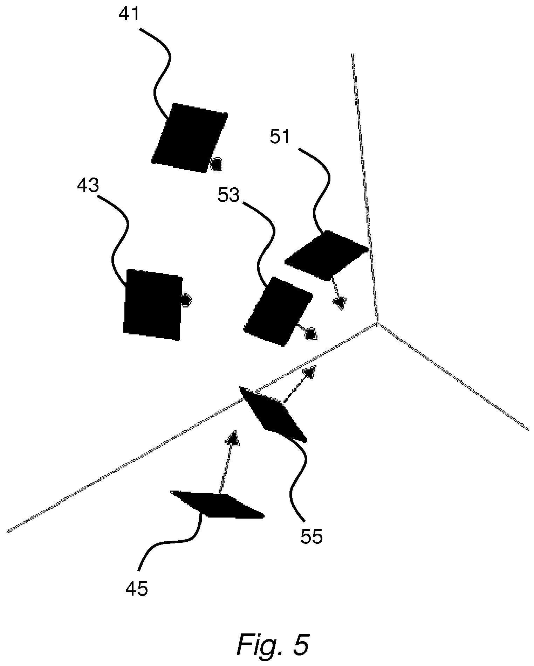

Furthermore, SfM analysis has inherent limitations in that reconstruction, e.g. 3D image reconstruction of the captured environment, results in an unknown scaling factor in the estimated camera poses. However, a consistent camera pose estimation is important for many higher level tasks such as camera localisation and 3D / volumetric reconstruction. Otherwise, a cumbersome, manual scaling adjustment must be made each time which takes time and is computationally inefficient. Such an inconsistency in scaling exists in the form of proportionally changing relative poses among different image capture devices. In theory, scale ambiguity may be resolved by taking into account the actual physical size of a known captured object. However, this may not be available and hence determining the scaling factor can be difficult. For example, referring to Figure 5, two different 3D reconstruction runs are shown for subsequent frames; camera poses indicted by reference numerals 41, 43, 45 are determined for a first frame and those indicated by reference numerals 51, 53, 55 are for the subsequent frame. It will be seen that the camera poses are subject to a sudden scale change in the order of 2.05. This can be problematic and sometimes catastrophic in applications such as virtual and/or augmented reality.

Therefore, we introduce methods and systems for determining positions of multi-directional image capture apparatuses. In other words, we describe how to determine, or estimate, camera poses. We then describe methods and systems for determining the scale factor for use in situations where a consistent geometric measurement is needed. The scale factor can then be used to adjust camera locations by multiplying the initial coordinates per camera with the scaling factor.

**Camera Pose Registration**

A computer vision method for performing camera pose registration will now be described.

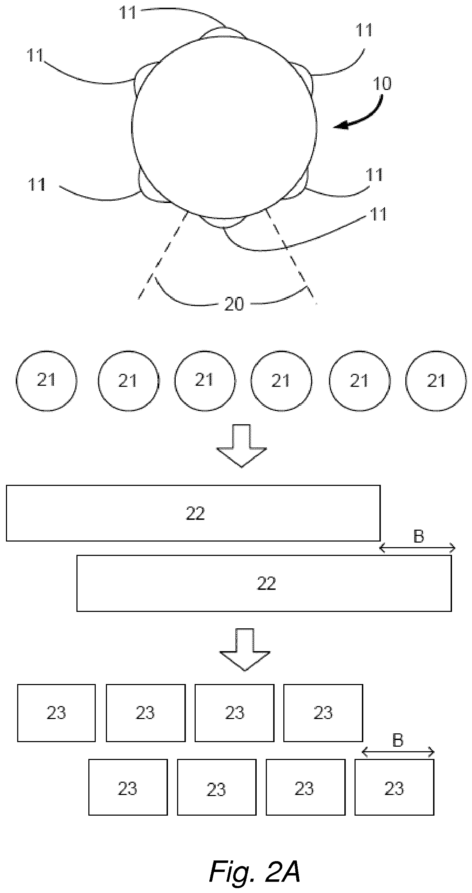

Figure 2A illustrates one of the plurality of multi-directional image capture apparatuses 10 of Figure 1. Each of the cameras 11 of the multi-directional image capture apparatus 10 may capture a respective first image 21. Each first image 21 may be an image of a scene within the field of view 20 of its respective camera 11. In some examples, the lens of the camera 11 may be a fish-eye lens and so the first image 21 may be a fish-eye image (in which the camera field of view is enlarged). However, the method described herein may be applicable for use with lenses and resulting images of other types. More specifically, the camera pose registration method described herein may also be applicable to images captured by a camera with a hyperbolic mirror in which the camera optical centre coincides with the focus of the hyperbola, and images captured by a camera with a parabolic mirror and an orthographic lens in which all reflected rays are parallel to the mirror axis and the orthographic lens is used to provide a focused image.

The first images 21 may be processed to generate a stereo-pair of panoramic images 22. Each panoramic image 22 of the stereo-pair may correspond to a different view of a scene captured by the first images 21 from which the stereo-pair is generated. For example, one panoramic image 22 of the stereo-pair may represent a left-eye panoramic image and the other one of the stereo-pair may represent a right-eye panoramic image. As such, the stereo-pair of panoramic images 22 may be offset from each other by a baseline distance B. By generating panoramic images 22 as an initial step, the effective field of view may be increased, which may allow the methods described herein to better deal with scenes which lack distinct textures (e.g. corridors).

The generated panoramas may be referred to as spherical (or part-spherical) panoramas in the sense that they may include image data from a sphere (or part of a sphere) around the multi-directional image capture apparatus 10.

If the first images 21 are fish eye images, processing the first images to generate the panoramic images may comprise de-warping the first images 21 and then stitching the de-warped images. De-warping the first images 21 may comprise re-projecting each of the first images to convert the first images 21 from a fish eye projection to a spherical projection. Fish eye to spherical re-projections are generally known in the art and will not be described here in detail. Stitching the de-warped images may, in general, be performed using any suitable image stitching technique. Many image stitching techniques are known in the art and will not be described here in detail. Generally, image stitching involves connecting portions of images together based on point correspondences between images (which may involve feature matching).

Following the generation of the stereo-pair of panoramic images 22, the stereo pair may be processed to generate one or more second images 23. More specifically, image re-projection may be performed on each of the panoramic images 22 to generate one or more re-projected second images 23. For example, if the panoramic image 22 is not rectilinear (e.g. if it is curvilinear), it may be re-projected to generate one or more second images 23 which are rectilinear images. As illustrated in Figure 2A, a corresponding set of second images 23 may be generated for each panoramic image 22 of the stereo pair. The type of re-projection may be dependent on the algorithm used to analyse the second images 23. For instance, as is explained below, structure from motion algorithms, which are typically used to analyse rectilinear images, may be used, in which case the re-projection may be selected so as to generate rectilinear images. However, it will be appreciated that, in general, the re-projection may generate any type of second image 23, as long as the image type is compatible with the algorithm used to analyse the re-projected images 23.

Each re-projected second image 23 may be associated with a respective virtual camera. A virtual camera is an imaginary camera which does not physically exist, but which corresponds to a camera which would have captured the re-projected second image 23 with which it is associated. A virtual camera may be defined by virtual camera parameters which represent the configuration of the virtual camera required in order to have captured to the second image 23. As such, for the purposes of the methods and operations described herein, a virtual camera can be treated as a real physical camera. For example, each virtual camera has, among other virtual camera parameters, a position and orientation which can be determined.

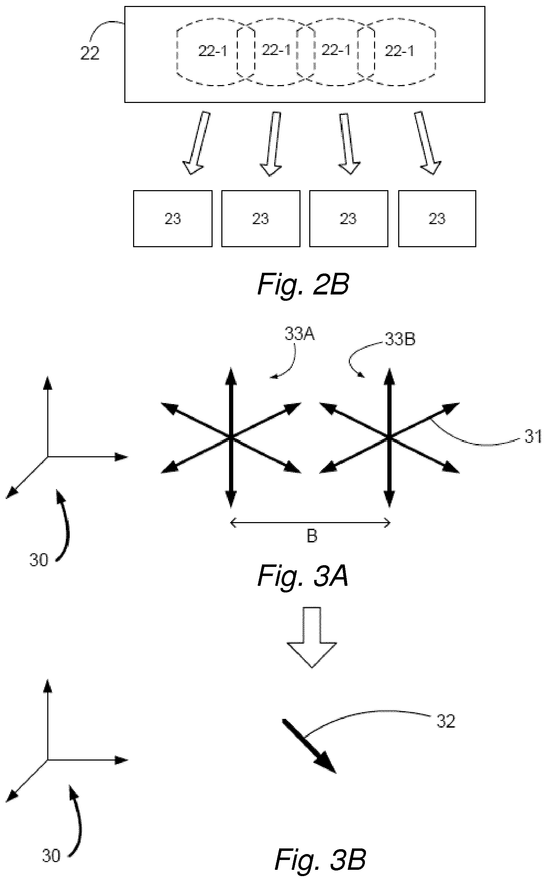

As illustrated by Figure 2B, the processing of each panoramic image 22 may be performed by resampling the panoramic image 22 based on a horizontal array of overlapping sub-portions 22-1 of the panoramic image 22. The sub-portions 22-1 may be chosen to be evenly spaced so that adjacent sub-portions 22-1 are separated by the same distance (as illustrated by Figure 2B). As such, the viewing directions of adjacent sub-portions 22-1 may differ by the same angular distance. A corresponding re-projected second image 23 may be generated for each sub-portion 22-1. This may be performed by casting rays following the pinhole camera model (which represents a first order approximation of the mapping from the spherical (3D) panorama to the 2D second images) based on a given field of view (e.g. 120 degrees) of each sub-portion 22-1 from a single viewpoint to the panoramic image 23. As such, each re-projected second image 23 may correspond to a respective virtual pinhole camera. The virtual pinhole cameras associated with second images 23 generated from one panoramic image 22 may all have the same position, but different orientations (as illustrated by Figure 3A).

Each second image 23 generated from one of the stereo-pair of panoramic images 22 may form a stereo pair with a second image 23 from the other one of the stereo-pair of panoramic images 22. As such, each stereo-pair of second images 23 may correspond to a stereo-pair of virtual cameras. Each stereo-pair of virtual cameras may be offset from each other by the baseline distance as described above.

It will be appreciated that, in general, any number of second images 23 may be generated. Generally speaking, generating more second images 23 may lead to less distortion in each of the second images 23, but may also increase computational complexity. The precise number of second images 23 may be chosen based on the scene/environment being captured by the multi-directional image capture apparatus 10.

The methods described with reference to Figures 2A and 2B may be performed for each of a plurality of multi-directional image capture apparatuses 10 which are capturing the same general environment, e.g. the plurality of multi-directional images capture apparatuses 10 as illustrated in Figure 1. In this way, all of the first images 21 captured by a plurality of multi-directional image capture apparatuses 10 of a particular scene may be processed as described above.

It will be appreciated that the first images 21 may correspond to images of a scene at a particular moment in time. For example, if the multi-directional image capture apparatuses 10 are capturing video images, a first image 21 may correspond to a single video frame of a single camera 11, and all of the first images 21 may be video frames that are captured at the same moment in time.

Figures 3A and 3B illustrate the process of determining the position and orientation of a multi-directional image capture apparatus 10. In Figures 3A and 3B, each arrow 31, 32 represents the position and orientation of a particular element in a reference coordinate system 30. The base of the arrow represents the position and the direction of the arrow represents the orientation. More specifically, each arrow 31 in Figure 3A represents the position and orientation of a virtual camera associated with a respective second image 23, and the arrow 32 in Figure 3B represents the position and orientation of the multi-directional image capture apparatus 10.

After generating the second images 23, the second images 23 may be processed to generate respective positions of the virtual cameras associated with the second images 23. The output of the processing for one multi-directional image capture apparatus 10 is illustrated by Figure 3A. The processing may include generating the positions of a set of virtual cameras for each panoramic image 22 of the stereo-pair of panoramic images. As illustrated by Figure 3A, one set of arrows 33A may correspond to virtual cameras of one of the stereo-pair of panoramic images 22, and the other set of arrows 33B may correspond to virtual cameras of the other one of the stereo-pair of panoramic images. The generated positions may be relative to the reference coordinate system 30. The processing of the second images may also generate respective orientations of the virtual cameras relative to the reference coordinate system 30. As mentioned above and illustrated by Figure 3A, all of the virtual cameras of each set of virtual cameras, which correspond to the same panoramic image 22, may have the same position but different orientations.

It will be appreciated that, in order to perform the processing for a plurality of multi-directional image capture apparatuses 10, it may be necessary for the multi-directional image capture apparatuses 10 to have at least partially overlapping fields of view with each other (for example, in order to allow point correspondence determination as described below).

The above described processing may be performed by using a structure from motion (SfM) algorithm to determine the position and orientation of each of the virtual cameras. The SfM algorithm may operate by determining point correspondences between various ones of the second images 23 and determining the positions and orientations of the virtual cameras based on the determined point correspondences. For example, the determined point correspondences may impose certain geometric constraints on the positions and orientations of the virtual cameras, which can be used to solve a set of quadratic equations to determine the positons and orientations of the virtual cameras relative to the reference coordinate system 30. More specifically, in some examples, the SfM process may involve any one of or any combination of the following operations: extracting images features, matching image features, estimating camera position, reconstructing 3D points, and performing bundle adjustment.

Once the positions of the virtual cameras have been determined, the position of the multi-directional image capture apparatus 10 relative to the reference coordinate system 30 may be determined based on the determined positions of the virtual cameras. Similarly, once the orientations of the virtual cameras have been determined, the orientation the multi-directional image capture apparatus 10 relative to the reference coordinate system 30 may be determined based on the determined orientations of the virtual cameras. The position of the multi-directional image capture apparatus 10 may be determined by averaging the positions of the two sets 33A, 33B of virtual cameras illustrated by Figure 3A. For example, as illustrated, all of the virtual cameras of one set 33A may have the same position as each other and all of the virtual cameras of the other set 33B may also have the same position as each other. As such, the position of the multi-directional image capture apparatus 10 may be determined to be the average of the two respective positions of the two sets 33A, 33B of virtual cameras.

Similarly, the orientation of the multi-directional image capture apparatus 10 may be determined by averaging the orientation of the virtual cameras. In more detail, the orientation of the multi-directional image capture apparatus 10 may be determined in the following way.

The orientation of each virtual camera may be represented by rotation matrix $R_l$. The orientation of the multi-directional image capture apparatus 10 may be represented by rotation matrix $R_{dev}$. The orientation of each virtual camera relative to the multi-directional image capture apparatus 10 may be known, and may be represented by rotation matrix $R_{ldev}$. Thus, the rotation matrices $R_l$ of the virtual cameras may be used to obtain a rotation matrix for multi-directional image capture apparatus 10 the according to:

$$R_{dev} = R_l R_{ldev}^{-1}$$

Put another way, the rotation matrix of a multi-direction image capture apparatus ($R_{dev}$) can be determined by multiplying the rotation matrix of a virtual camera ($R_l$) onto the inverse of the matrix representing the orientation of the virtual camera relative to the orientation of the multi-directional image capture apparatus ($R_{ldev}^{-1}$).

For example, if there are twelve virtual cameras (six from each panoramic image 22 of the stereo-pair of panoramic images) corresponding to the multi-directional image capture apparatus 10 (as illustrated in Figure 3A) then twelve rotation matrices are obtained for the orientation of the multi-directional image capture apparatus 10. Each of these rotation matrices may then be converted into corresponding Euler angles to obtain a set of Euler angles for the multi-directional image capture apparatus 10. The set of Euler angles may then be averaged and converted into a final rotation matrix representing the orientation of the multi-directional image capture apparatus 10.

The set of Euler angles may then be averaged according to:

$$\theta_l = \arctan \frac{\sum_{i=0}^{5} sin(\theta_i)}{\sum_{i=0}^{5} cos(\theta_i)}$$

Where $\theta_l$ represents the averaged Euler angles for a multi-directional image capture apparatus 10 and $\theta_i$ represents the set of Euler angles. Put another way, the averaged Euler angles are determined by calculating the sum of the sines of the set of Euler angles divided by the sum of the cosines of the set of Euler angles, and taking the arctangent of the ratio. $\theta_l$ may then be converted back into a rotation matrix representing the final determined orientation of multi-directional image capture apparatus 10.

It will be appreciated that the above formula is for the specific example in which there are nine virtual cameras - the maximum value of i may vary according to the number of virtual cameras generated. For example, if there are twelve virtual cameras as illustrated in Figure 3A, then i may take values from zero to eleven.

In some examples, unit quaternions may be used instead of Euler angles for the abovementioned process. The use of unit quaternions to represent orientation is a known mathematical technique and will not be described in detail here. Briefly, quaternions $q_1$, $q_2$, ... $q_N$ corresponding to the virtual camera rotation matrices may be determined. Then, the quaternions may be transformed, as necessary, to ensure that they are all on the same side of the 4D hypersphere. Specifically, one representative quaternion $q_M$ is selected and the signs of any quaternions $q_l$ where the product of $q_M$ and $q_l$ is less than zero may be inverted. Then, all quaternions $q_l$ (as 4D vectors) may be summed into an average quaternion $q_A$, and $q_A$ may be normalised into a unit quaternion $q_A'$. The unit quaternion $q_A'$ may represent the averaged orientation of the camera and may be converted back to other orientation representations as desired. Using unit quaternions to represent orientation may be more numerically stable than Euler angles.

In will be appreciated that the generated positions of the virtual cameras (e.g. from the SfM algorithm) may be in units of pixels. Therefore, in order to enable scale conversions between pixels and a real world distance (e.g. metres), a pixel to real world distance conversion factor may be determined. This may be performed by determining the baseline distance B of a stereo-pair of virtual cameras in both pixels and in a real world distance. The baseline distance in pixels may be determined from the determined positions of the virtual cameras in the reference coordinate system 30. The baseline distance in a real world distance (e.g. metres) may be known already from being set initially during the generation of the panoramic images 22. The pixel to real world distance conversion factor may then be simply calculated by taking the ratio of the two distances. This may be further refined by calculating the conversion factor based on each of the stereo-pairs of virtual cameras, determining outliers and inliers (as described in more detail below), and averaging the inliers to obtain a final pixel to real world distance conversion factor. The pixel to real world distance conversion factor may be denoted $S_{pixel2meter}$ in the present specification.

The inlier and outlier determination may be performed according to:

$$d_i = |S_i - \text{Median}(S)|, \forall S_i \in S$$

$$d_\sigma = \text{Median}(\{d_0, \dots, d_N\})$$

$$\text{inliers} = \frac{d_i}{d_\sigma} < m, \forall i \in N$$

where $S$ is the set of pixel to real world distance ratios of all stereo-pairs of virtual cameras, $d_i$ is a measure of the difference between a pixel to real world distance ratio and the median of all pixel to real world distance ratios, $d_\sigma$ is the median absolute deviation (MAD), $m$ is a threshold value below which a determined pixel to real world distance ratio is considered an inlier (for example, $m$ may be set to be 2). The MAD may be used as it may be a robust and consistent estimator of inlier errors, which follow a Gaussian distribution.

It will therefore be understood from the above expressions that a pixel to real world distance ratio may be determined to be an inlier if the difference between its value and the median value divided by the median absolute deviation is less than a threshold value. That is to say, for a pixel to real world distance ratio to be considered an inlier, the difference between its value and the median value must be less than a threshold number of times larger than the median absolute deviation.

Once final positions for a plurality of multi-directional image capture apparatuses 10 has been determined, the relative positions of the plurality of multi-directional image capture apparatuses may be determined according to:

$$\begin{bmatrix} x_j \\ y_j \\ z_j \end{bmatrix} = \frac{c^j_{dev} - c^i_{dev}}{s_{pixel2meter}}$$

In the above equation, $\begin{bmatrix} x_j \\ y_j \\ z_j \end{bmatrix}$ represents the relative positions of one of the plurality of multi-directional image capture apparatuses (apparatus *j*) relative to another one of the plurality of multi-directional image capture apparatuses (apparatus *i*). $c^j_{dev}$ is the position of apparatus *j* and $c^i_{dev}$ is the position of apparatus *i*. $S_{pixel2meter}$ is the pixel to real world distance conversion factor.

As will be understood from the above expression, a vector representing the relative position of one of the plurality of multi-directional image capture apparatuses relative to another one of the plurality of multi-directional image capture apparatuses may be determined by taking the difference between their positions. This may be divided by the pixel-to-real world distance conversion factor depending on the scale desired.

As such, the positions of all of the multi-directional image capture apparatuses 10 relative to one another may be determined in the reference coordinate system 30.

The baseline distance B described above described above may be chosen in two different ways. One way is to set a predetermined fixed baseline distance (e.g. based on the average human interpupillary distance) to be used to generate stereo-pairs of panoramic images. This fixed baseline distance may then be used to generate all of the stereo-pairs of panoramic images.

An alternative way is to treat B as a variable within a range (e.g. a range constrained by the dimensions of the multi-directional image capture apparatus) and to evaluate a cost function for each value of B within the range. For example, this may be performed by minimising a cost function which indicates an error associated with the use of each of a plurality of baseline distances, and determining that the baseline distance associated with the lowest error is to be used.

The cost function may be defined as the weighted average of the re-projection error from the structure from motion algorithm and the variance of calculated baseline distances between stereo-pairs of virtual cameras. An example of a cost function which may be used is $E(B) = w_0 \times R(B) + w_1 \times V(B)$, where $E(B)$ represents the total cost, $R(B)$ represents the re-projection error returned by the SfM algorithm by aligning the generated second images from the stereo-pairs displaced by value B, $V(B)$ represents the variance of calculated baseline distances, and $w_0$ and $w_1$ are constant weighting parameters for $R(B)$ and $V(B)$ respectively.

As such, the above process may involve generating stereo-pairs of panoramic images for each value of B, generating re-projected second images from the stereo-pairs, and inputting the second images for each value of B into a structure from motion algorithm, as described above. It will be appreciated that the re-projection error from the structure from motion algorithm may be representative of a global registration quality and the variance of calculated baseline distances may be representative of the local registration uncertainty.

It will be appreciated that, by evaluating a cost function as described above, the baseline distance with the lowest cost (and therefore lowest error) may be found, and this may be used as the baseline distance used to determine the position/orientation of the multi-directional image capture apparatus 10.

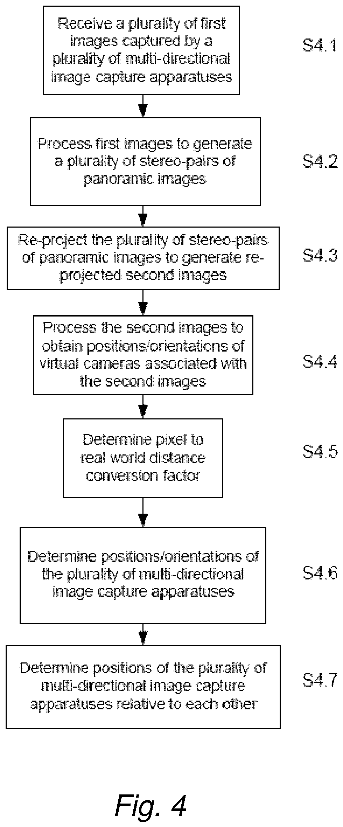

Figure 4 is a flowchart showing examples of operations as described herein.

At operation 4.1, a plurality of first images 21 which are captured by a plurality of multi-directional image capture apparatuses 10 may be received. For example, image data corresponding to the first images 21 may be received at image processing apparatus 50 (see Figure 5).

At operation 4.2, the first images 21 may be processed to generate a plurality of stereo-pairs of panoramic images 22.

At operation 4.3, the stereo-pairs of panoramic images 22 may be re-projected to generate re-projected second images 23.

At operation 4.4, the second images 23 from operation 4.3 may be processed to obtain positions and orientations of virtual cameras. For example, the second images 23 may be processed using a structure from motion algorithm.

At operation 4.5, a pixel-to-real world distance conversion factor may be determined based on the positions of the virtual cameras determined at operation 4.4 and a baseline distance between stereo-pairs of panoramic images 22.

At operation 4.6, positions and orientations of the plurality of multi-directional image capture apparatuses 10 may be determined based on the positions and orientations of the virtual cameras 11 determined at operation 4.4.

At operation 4.7, positions of the plurality of multi-directional image capture apparatuses 10 relative to each other may be determined based on the positions of the plurality of multi-directional image capture apparatuses 10 determined at operation 4.7.

It will be appreciated that, as described herein, the position of a virtual camera may be the position of the centre of a virtual lens of the virtual camera. The position of the multi-directional image capture apparatus 10 may be the centre of the multi-directional image capture apparatus (e.g. if a multi-directional image capture apparatus is spherically shaped, its position may be defined as the geometric centre of the sphere).

**Scale Factor ($\alpha$) Determination**

The output from the previous stage is the camera pose data, i.e. data representing the positions and orientations of the plurality of multi-directional image capture apparatuses. Also, the relative positions of the multi-directional image capture apparatuses may also be determined.

Also provided is a first point cloud ($P_A$) visible and correspondent to the virtual cameras 33A, 33B. The first point cloud ($P_A$) may be considered a set of sparse 3D points generated during the SfM process. Purely by way of example, the general steps of the SfM process may involve:

1. detecting feature points and matching features in image pairs;
2. computing a fundamental matrix from the matches;
3. optionally using a random sample consensus (RANSAC) method to remove influence of matching outliers;
4. computing a projection matrix from the fundamental matrix;
5. generating a 3D point set (i.e. a point cloud) by triangulating 2D matched feature points. Each 3D point in the point cloud has at least two correspondent 2D points (i.e. pixels) visible in one image pair; and
6. running a bundle adjustment to refine the camera pose and 3D points.

Methods and systems for determining the scale factor $\alpha$ will now be described.

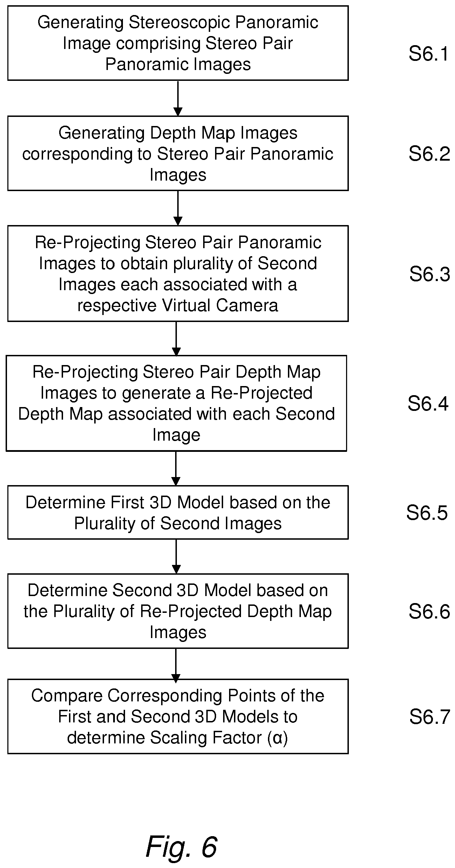

Figure 6 is a flowchart showing examples of operations for determining the scale factor, which operations may for example be performed by a computing apparatus. Certain operations may be performed in parallel, or in a different order as will be appreciated. Certain operations may be omitted in some cases.

An operation 6.1 comprises generating a stereoscopic panoramic image comprising stereo pair images, e.g. a left-eye panoramic image and a right-eye panoramic image. For example, operation 6.1 may correspond with operation 4.1 in Figure 4.

An operation 6.2 comprises generating depth map images corresponding to the stereo pair images, e.g. the left-eye panoramic image and the right-eye panoramic image. Any off-the-shelf stereo matching method known in the art may be used for this purpose, and so a detailed explanation is not given.

An operation 6.3 comprises re-projecting the stereo pair panoramic images to obtain a plurality of second images, each associated with a respective virtual camera. For example, operation 6.3 may correspond with operation 4.3 in Figure 4.

An operation 6.4 comprises re-projecting the stereo pair depth map images to generate a re-projected depth map associated with each second image.

An operation 6.5 comprises determining a first 3D model based on the plurality of second images. For example, the first 3D model may comprise data from the first point cloud (PA).

An operation 6.6 comprises determining a second 3D model based on the plurality of re-projected depth map images. For example, the second 3D model may comprise data corresponding to a second point cloud ($P_B$).

An operation 6.7 comprises comparing corresponding points of the first and second 3D models ($P_A$ and $P_B$) determined in operations 6.5 and 6.6 to determine the scaling factor ($\alpha$.)

It therefore follows that certain operations in Figure 6 may already be performed during performance of the Figure 4 operations, avoiding duplication of certain operations for efficient computation. Additionally, the scaling factor $\alpha$ may be computed without additional hardware, and at high speed.

A more detailed description of the Figure 6 operations will now be provided.

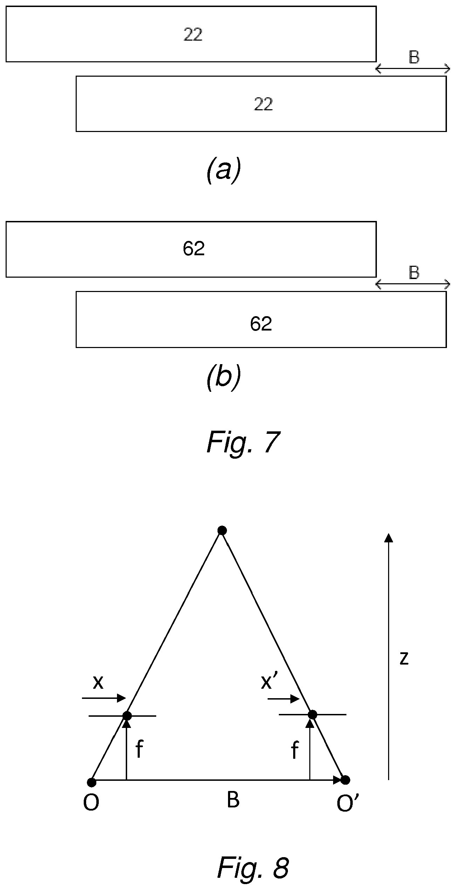

Referring to Figure 7a, operation 6.1 may correspond with operation 4.1 in Figure 4 and therefore may produce the stereo pair panoramic images 22 shown in Figure 2A. No further description is therefore necessary.

Referring to Figure 7b, operation 6.2 uses any known stereo-matching algorithm to produce stereo-pair depth images 62 corresponding to the stereo-pair panoramic images. Figure 8 illustrates the general principle as to how depth information can be derived from two images of the same scene, e.g. stereo-pair images. Figure 8 contains equivalent triangles, and hence using their equivalent equations provides the following result:

$$disparity = x - x' = \frac{Bf}{z}$$

where $x$ and $x'$ are the distance between points in an image plane corresponding to the 3D scene point and their camera centre. $B$ is the distance between two cameras and $f$ is the focal length of the camera. So, the depth of a point in a scene is inversely proportional to the difference in distance of corresponding image points and their camera centres. From this, we can derive the depth of overlapping pixels in a pair of images, for example a left-eye image and a right-eye image of a stereo image pair.

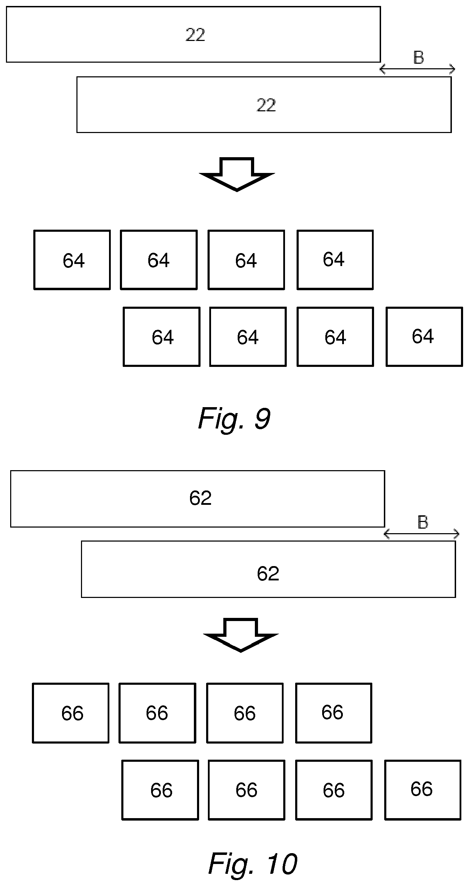

Referring to Figure 9, operation 6.3 comprises re-projecting the stereo pair panoramic images to obtain a plurality of second images 64, each associated with a respective virtual camera. For further explanation, reference is made to the above description in relation to Figures 2a and 2b, and in particular as to how each second image 64 is associated with a respective virtual camera. The same process applies here and hence operation 6.3 is equivalent to operation 4.3.

Referring to Figure 10, operation 6.4 comprises the same process of re-projecting the stereo pair depth map images 62 to generate re-projected depth map images 66 associated with each second image 64 as shown. Again, reference is made to the above description in relation to Figures 2a and 2b regarding re-projection; in this case, however, it is the depth map images 62 that are re-projected.

Preferably, the re-projected second images 64 and the corresponding re-projected depth maps 66 are transformed to rectilinear images of each virtual camera. Thus, a pixel-level correspondence can be made between a depth map 66 and its associated second image 64.

Operation 6.5 may comprise determining the first 3D model by using data from the previously generated first point cloud ($P_A$). As such, this data may already be provided.

Operation 6.6 comprises determining a second 3D model based on the plurality of re-projected depth map images 66.

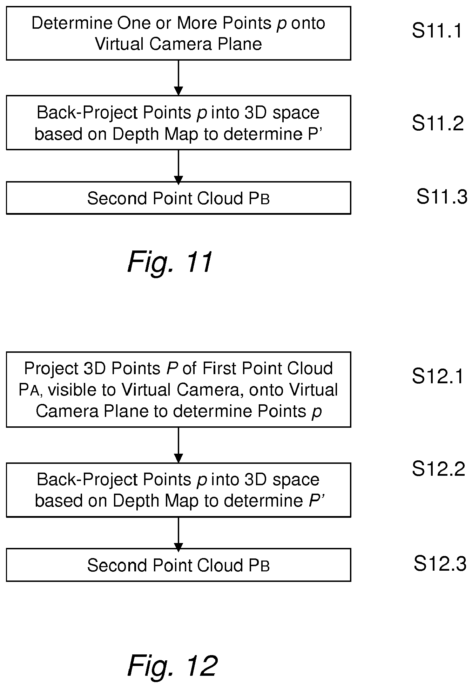

Referring to Figure 11, there is shown a flowchart showing examples of operations for determining the second 3D model, which operations may for example be performed by a computing apparatus. For example, the second 3D model may comprise data corresponding to a second point cloud ($P_B$). The flowchart represents steps performed for one virtual camera having an associated virtual camera point and virtual camera plane. A virtual camera plane refers to the virtual image plane located in 3D space. Its location may be determined from the SfM process. The steps can be performed for the other virtual cameras, and for virtual cameras for a plurality of multi-directional image capture apparatus 10.

In a first operation 11.1, one or more points $p$ are determined on the virtual camera plane. As explained below, the or each point $p$ may be determined based on the first 3D model ($P_A$).

In a subsequent operation 11.2, the or each point $p$ is back-projected into 3D space based on the depth map image 66 to generate a corresponding 3D point in the second point cloud ($P_B$).

Referring to Figure 12, there is shown a flowchart showing a more detailed method for determining the second 3D model. A first operation 12.1 comprises projecting 3D points P of the first point cloud ($P_A$), which is/are visible to the virtual camera, onto the virtual camera plane, to determine corresponding points $p$ on said 2D plane. The subsequent steps 12.2, 12.3 correspond to steps 11.2, 11.3 of Figure 11.

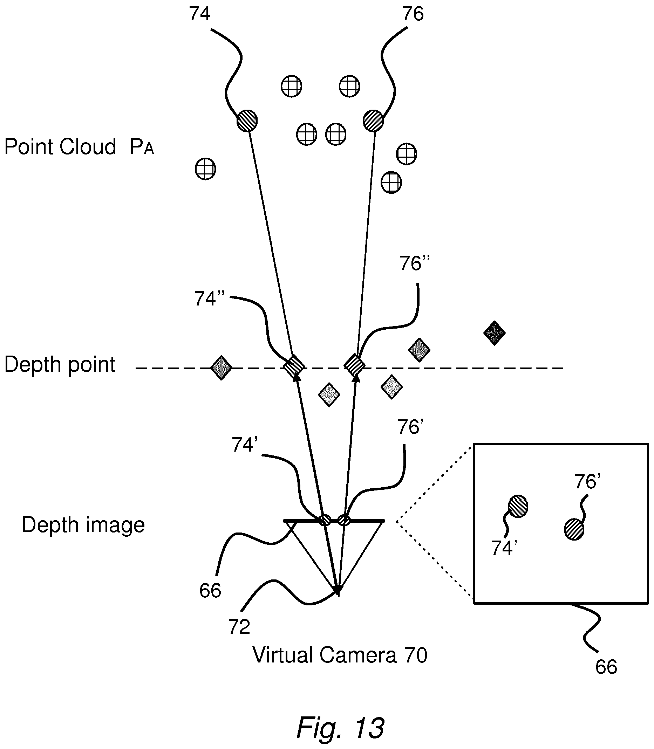

Referring to Figure 13, the steps of Figures 11 and 12 will now be described with reference to a graphical example.

Figure 13 shows a part of the first point cloud ($P_A$) in relation to a first virtual camera 70 associated with one of the second images 64. The virtual camera 70 has a reference point 72 corresponding to, for example, its corresponding pinhole position. The depth map image 66 is shown located on the virtual camera plane. A subset of points ($P$) 74, 76 from the first point cloud ($P_A$) are projected onto the 2D virtual camera plane to provide points ($p$) 74', 76'. This subset may correspond to the part of the first point cloud ($P_A$) visible from the current 2D virtual camera 70. This selection may be deterministic given the 3D points and the camera pose.

Specifically, the 2D projection $p$ of a visible 3D point $P \in P_A^i$ to a virtual camera i is computed as:

$$p = K[R \mid t]P$$

where $K$ and $[R|t]$ are the respective intrinsic and extrinsic parameters of said virtual camera. More specifically, the 2D projection $p$ may be computed as:

$$s \begin{bmatrix} u \\ v \\ 1 \end{bmatrix} = \begin{bmatrix} f_x & 0 & c_x \\ 0 & f_y & c_y \\ 0 & 0 & 1 \end{bmatrix} \begin{bmatrix} r_{11} & r_{12} & r_{13} & t_1 \\ r_{21} & r_{22} & r_{23} & t_2 \\ r_{31} & r_{32} & r_{33} & t_3 \end{bmatrix} \begin{bmatrix} X \\ Y \\ Z \\ 1 \end{bmatrix}$$

where K, R and t are the camera intrinsic (K) and extrinsic (R, t) parameters, respectively, of each virtual camera estimated by SfM.

Subsequently, said points (p) 74', 76' are back-projected into 3D space, according to the depth values in corresponding parts of the depth map 66, to provide corresponding depth points (P') 74", 76" which provide at least part of the second point cloud (P$_B$) of the second 3D model.

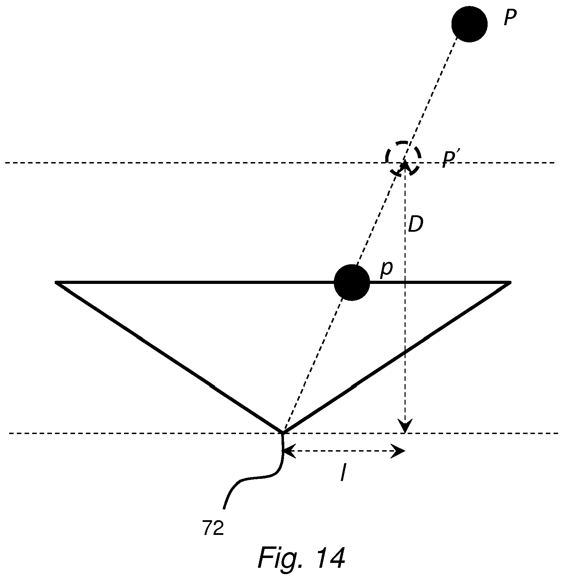

Referring to Figure 14, assuming the 2D coordinates of *p* are (u, v) this may be performed by determining the distance *l* between the camera centre 72 and P' whose depth value (from the depth map image 66) is D. The 3D coordinates of *P'* may be computed as

$$V = K^{-1}p$$

$$P' = t + lR^{-1}\left(\frac{V}{|V|}\right).$$

Theoretically, *P* and *P'* should correspond to the same 3D point; this is because P and P' correspond to the same 2D co-ordinate and are lying on the same projection ray. Any divergence will be mainly due to the scaling problem of SfM and, because *P* and *P'* lie on the same ray / line in 3D space, the following relation holds:

$$P' = \alpha P$$

where $\alpha$ is the scaling factor we wish to derive. All *P'* constitute points in the second point cloud or 3D model.

A unique solution for $\alpha$ can be efficiently obtained using, for example, linear regression given all pairs of *P* and *P'*.

$$\alpha = (P^T P)^{-1} P^T P'$$

Applying a on camera locations from SfM therefore resolves the scaling issue.

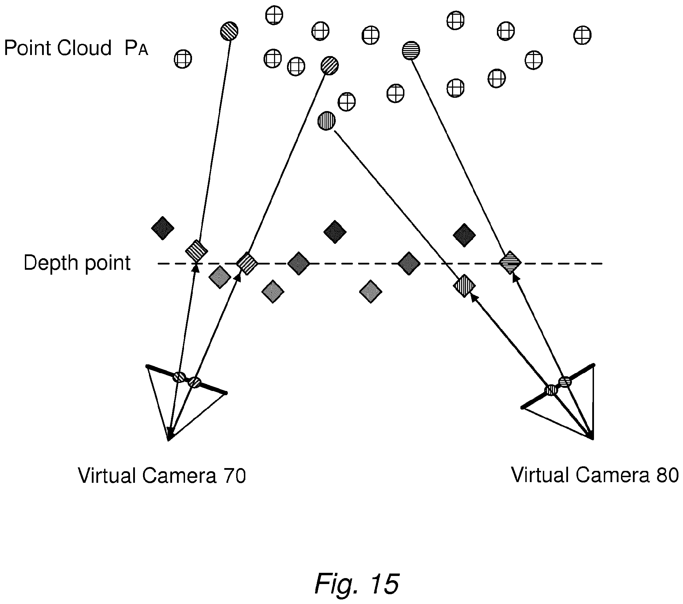

Figure 15 is a graphical representation of how the above method may be applied to multiple virtual cameras 70, 80.

The scaling factor $\alpha$ is applicable for all multi-directional image capture apparatuses, if used, because it is computed based on the 3D point cloud generated from the virtual cameras of all devices. All virtual cameras are generated using the same intrinsic parameters.

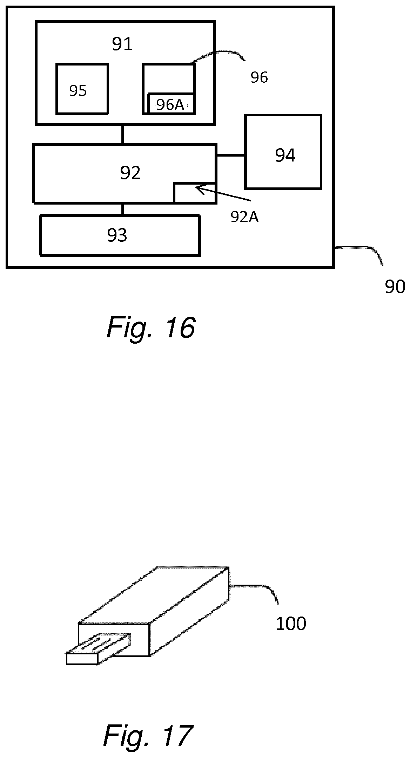

Figure 16 is a schematic block diagram of an example configuration of image processing (or more simply, computing) apparatus 90, which may be configured to perform any of or any combination of the operations described herein. The computing apparatus 90 may comprise memory 91, processing circuitry 92, an input 93, and an output 94.

The processing circuitry 92 may be of any suitable composition and may include one or more processors 92A of any suitable type or suitable combination of types. For example, the processing circuitry 92 may be a programmable processor that interprets computer program instructions and processes data. The processing circuitry 92 may include plural programmable processors. Alternatively, the processing circuitry 92 may be, for example, programmable hardware with embedded firmware. The processing circuitry 92 may be termed processing means. The processing circuitry 92 may alternatively or additionally include one or more Application Specific Integrated Circuits (ASICs). In some instances, processing circuitry 92 may be referred to as computing apparatus.

The processing circuitry 92 described with reference to Figure 16 may be coupled to the memory 91 (or one or more storage devices) and may be operable to read/write data to/from the memory. The memory 91 may store thereon computer readable instructions 96A which, when executed by the processing circuitry 92, may cause any one of or any combination of the operations described herein to be performed. The memory 91 may comprise a single memory unit or a plurality of memory units upon which the computer-readable instructions (or code) 96A is stored. For example, the memory 91 may comprise both volatile memory 95 and non-volatile memory 96. For example, the computer readable instructions 96A may be stored in the non-volatile memory 96 and may be executed by the processing circuitry 92 using the volatile memory 95 for temporary storage of data or data and instructions. Examples of volatile memory include RAM, DRAM, and SDRAM etc. Examples of non-volatile memory include ROM, PROM, EEPROM, flash memory, optical storage, magnetic storage, etc. The memories 91 in general may be referred to as non-transitory computer readable memory media.

The input 93 may be configured to receive image data representing the first images 21 described herein. The image data may be received, for instance, from the multi-directional image capture apparatuses 10 themselves or may be received from a storage device. The output 94 may be configured to output any of or any combination of the camera pose registration information described herein. As discussed above, the camera pose registration information output by the computing apparatus 90 may be used for various functions as described above with reference to Figure 1. The output 94 may also be configured to output any of or any combination of the scale factor $\alpha$ or any data derived from, or computed using, the scale factor $\alpha$.

Figure 17 illustrates an example of a computer-readable medium 100 with computer-readable instructions (code) stored thereon. The computer-readable instructions (code), when executed by a processor, may cause any one of or any combination of the operations described above to be performed.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow diagrams of Figures 4, 6, 11 and 12 are examples only and that various operations depicted therein may be omitted, reordered and/or combined. For example, it will be appreciated that operation S4.5 as illustrated in Figure 4 may be omitted.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

**Claims**

1. An apparatus comprising:

   means for generating, from a plurality of first images representing a scene, at least one stereoscopic panoramic image comprising a stereo pair of panoramic images;
   means for generating depth map images corresponding to each of the stereo pair images;
   means for re-projecting each of the stereo pair images to obtain a plurality of second images, each associated with a respective virtual camera;

means for re-projecting each of the stereo pair depth map images to generate a re-projected depth map associated with each second image;

means for determining a first three-dimensional model of the scene based on the plurality of second images;

means for determining a second three-dimensional model of the scene based on the plurality of re-projected depth map images; and

means for comparing one or more corresponding points of the first and second three-dimensional models to determine a scaling factor.

2. The apparatus of claim 1, wherein the first images are captured by respective cameras of a multi-directional image capture apparatus.

3. The apparatus of claim 2, wherein a plurality of sets of first images are generated using a plurality of multi-directional image capture apparatuses, and wherein steps (i) to (vii) are performed for each multi-directional image capture apparatus.

4. The apparatus of any preceding claim, wherein step (vi) comprises back-projecting one or more points *p,* located on a plane associated with respective virtual cameras, into three-dimensional space.

5. The apparatus of claim 4, wherein the one or more points *p* are determined based on the first three-dimensional model.

6. The apparatus of claim 5, wherein the one or more points *p* are determined by projecting one or more points *P* of the first three-dimensional model, visible to a particular virtual camera, to the plane associated with said virtual camera.

7. The apparatus of claim 6, wherein each of the one or more points *p* is determined based on intrinsic and extrinsic parameters of the said virtual camera.

8. The apparatus of claim 7, wherein each of the one or more points *p* is determined substantially by:

$$p = K[R \mid t]P$$

where *K* and *[R|t]* are the respective intrinsic and extrinsic parameters of said virtual camera.

9. The apparatus of any of claims 6 to 8, wherein back-projecting the one or more points *p* comprises, for said virtual camera, identifying a correspondence between a point *p* on the virtual camera plane and a point *P* of the first three-dimensional model and determining a new point *P'* of the second three-dimensional model based on a depth value associated with the point p on the depth map image.

10. The apparatus of claim 9, wherein the new point *P'* is located on a substantially straight line that passes through points *p* and *P.*

11. The apparatus of any preceding claim, wherein the plurality of first images comprise fisheye images.

12. The apparatus of claim 11, wherein the plurality of first images are processed to generate the plurality of stereo-pairs of panoramic images by de-warping the first images, and stitching the de-warped images to generate the plurality of stereo-pairs of panoramic images.

13. The apparatus of any preceding claim, wherein the second images and the depth map images are rectilinear images.

14. A method comprising:

(i) generating, from a plurality of first images representing a scene, at least one stereoscopic panoramic image comprising a stereo-pair of panoramic images;

(ii) generating depth map images corresponding to each of the stereo-pair images;

(iii) re-projecting each of the stereo pair images to obtain a plurality of second images, each associated with a respective virtual camera;

(iv) re-projecting each of the stereo-pair depth map images to generate a re-projected depth map associated with each second image;
(v) determining a first three-dimensional model of the scene based on the plurality of second images;
(vi) determining a second three-dimensional model of the scene based on the plurality of re-projected depth map images; and
(vii) comparing one or more corresponding points of the first and second three-dimensional models to determine a scaling factor.

15. A computer-readable medium having computer-readable code stored thereon, the computer readable code, when executed by at least one processor, causes performance of:

(i) generating, from a plurality of first images representing a scene, at least one stereoscopic panoramic image comprising a stereo pair of panoramic images;
(ii) generating depth map images corresponding to each of the stereo pair images;
(iii) re-projecting each of the stereo pair images to obtain a plurality of second images, each associated with a respective virtual camera;
(iv) re-projecting each of the stereo pair depth map images to generate a re-projected depth map associated with each second image;
(v) determining a first three-dimensional model of the scene based on the plurality of second images;
(vi) determining a second three-dimensional model of the scene based on the plurality of re-projected depth map images; and
(vii) comparing one or more corresponding points of the first and second three-dimensional models to determine a scaling factor.

Fig. 1

*Fig. 2A*

*Fig. 2B*

*Fig. 3A*

*Fig. 3B*

Receive a plurality of first
images captured by a
plurality of multi-directional
image capture apparatuses

S4.1

Process first images to generate
a plurality of stereo-pairs of
panoramic images

S4.2

Re-project the plurality of stereo-pairs
of panoramic images to generate re-
projected second images

S4.3

Process the second images to
obtain positions/orientations of
virtual cameras associated with
the second images

S4.4

Determine pixel to
real world distance
conversion factor

S4.5

Determine positions/orientations of
the plurality of multi-directional
image capture apparatuses

S4.6

Determine positions of the plurality of
multi-directional image capture
apparatuses relative to each other

S4.7

*Fig. 4*

Fig. 5

| Generating Stereoscopic Panoramic Image comprising Stereo Pair Panoramic Images | S6.1 |

| Generating Depth Map Images corresponding to Stereo Pair Panoramic Images | S6.2 |

| Re-Projecting Stereo Pair Panoramic Images to obtain plurality of Second Images each associated with a respective Virtual Camera | S6.3 |

| Re-Projecting Stereo Pair Depth Map Images to generate a Re-Projected Depth Map associated with each Second Image | S6.4 |

| Determine First 3D Model based on the Plurality of Second Images | S6.5 |

| Determine Second 3D Model based on the Plurality of Re-Projected Depth Map Images | S6.6 |

| Compare Corresponding Points of the First and Second 3D Models to determine Scaling Factor ($\alpha$) | S6.7 |

*Fig. 6*

22

*(a)*

62

B

62

*(b)*

## Fig. 7

z

x

x'

f

f

O

B

O'

## Fig. 8

22

B

22

64 64 64 64

64 64 64 64

*Fig. 9*

62

B

62

66 66 66 66

66 66 66 66

*Fig. 10*

| Determine One or More Points $p$ onto Virtual Camera Plane | S11.1 |

$\downarrow$

| Back-Project Points $p$ into 3D space based on Depth Map to determine P' | S11.2 |

$\downarrow$

| Second Point Cloud PB | S11.3 |

*Fig. 11*

| Project 3D Points $P$ of First Point Cloud PA, visible to Virtual Camera, onto Virtual Camera Plane to determine Points $p$ | S12.1 |

$\downarrow$

| Back-Project Points $p$ into 3D space based on Depth Map to determine $P'$ | S12.2 |

$\downarrow$

| Second Point Cloud PB | S12.3 |

*Fig. 12*

74   76

Point Cloud Pₐ

76"

74"

Depth point

76'

74'

Depth image

76'

74'

66

72

Virtual Camera 70

66

Fig. 13

*Fig. 14*

Point Cloud $P_A$

Depth point

Virtual Camera 70

Virtual Camera 80

*Fig. 15*

Fig. 16

Fig. 17

Europäisches
Patentamt

European
Patent Office

Office européen
des brevets

# EUROPEAN SEARCH REPORT

Application Number

EP 18 17 7440

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | IOANNIS STAMOS ET AL: "Integrating Automated Range Registration with Multiview Geometry for the Photorealistic Modeling of Large-Scale Scenes", INTERNATIONAL JOURNAL OF COMPUTER VISION, KLUWER ACADEMIC PUBLISHERS, BO, vol. 78, no. 2-3, 10 November 2007 (2007-11-10), pages 237-260, XP019581884, ISSN: 1573-1405 * abstract * * page 238 - page 240 * * page 255 - page 257 * | 1-15 | INV. G06T3/40 G06T7/593 |
| A | ASHWIN MATHUR ET AL: "Multisensory Omni-directional Long-term Place Recognition: Benchmark Dataset and Analysis", ARXIV.ORG, CORNELL UNIVERSITY LIBRARY, 201 OLIN LIBRARY CORNELL UNIVERSITY ITHACA, NY 14853, 18 April 2017 (2017-04-18), XP080763623, * abstract * * page 5; figure 1 * | 1-15 | |
| A | US 2015/054913 A1 (ANNAU THOMAS M [US] ET AL) 26 February 2015 (2015-02-26) * abstract * | 1-15 | TECHNICAL FIELDS SEARCHED (IPC) G06T |
| A | ANTHONY P. BADALI ET AL: "Scale factor in digital cameras", PROCEEDINGS OF SPIE, vol. 5969, 28 September 2005 (2005-09-28), page 59692B, XP055521991, 1000 20th St. Bellingham WA 98225-6705 USA ISSN: 0277-786X, DOI: 10.1117/12.632215 ISBN: 978-1-5106-2011-7 * the whole document * | 1-15 | |

The present search report has been drawn up for all claims

| Place of search | Date of completion of the search | Examiner |
|---|---|---|
| Munich | 7 November 2018 | Millet, Christophe |

## ANNEX TO THE EUROPEAN SEARCH REPORT
## ON EUROPEAN PATENT APPLICATION NO.

EP 18 17 7440

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2018

| Patent document cited in search report | Publication date | Patent family member(s) | | Publication date |
|---|---|---|---|---|
| US 2015054913 A1 | 26-02-2015 | JP | 6289641 B2 | 07-03-2018 |
| | | JP | 2016537903 A | 01-12-2016 |
| | | JP | 2016538790 A | 08-12-2016 |
| | | US | 2015054913 A1 | 26-02-2015 |
| | | US | 2015055929 A1 | 26-02-2015 |
| | | US | 2015058102 A1 | 26-02-2015 |
| | | US | 2016373640 A1 | 22-12-2016 |
| | | US | 2017236149 A1 | 17-08-2017 |
| | | US | 2017236162 A1 | 17-08-2017 |
| | | WO | 2015026632 A1 | 26-02-2015 |
| | | WO | 2015027105 A1 | 26-02-2015 |

EPO FORM P0459

For more details about this annex : see Official Journal of the European Patent Office, No. 12/82